# EUROPEAN PATENT APPLICATION

(11) **EP 1 309 159 A1**
(43) Date of publication of application: **07.05.2003**
(21) Application number: 01410139.8
(22) Date of filing: 30.10.2001
(51) Int. Cl.: H04M 3/42, H04J 3/16

(54) **Data processing system and method**

(71) Applicant: Hewlett-Packard Company, Palo Alto, CA 94304 (US)
(72) Inventor: Lyonnaz, Gerard, 38760 Varces (FR)
(74) Representative: Lloyd, Richard Graham (GB)

(57) **Abstract**

The present invention relates to a data processing system and method and, more particularly, to a TDM resource manager which responds to receiving a request from an application for specified call processing resources, by determining whether or not there exists a time slot of a TDM bus that can be used to access the DSPs resources required to meet the needs of the application. If such a time slot exists, that time slot is reserved for use by the voice application and the voice application executes using appropriate calls to the reserved DSP resources over the reserved time slots.

## Description

### Field of the Invention

The present invention relates to a data processing system and method and, more particularly, to such a data processing system and method which uses a time division multiplexed bus for processing data using resources connected to that bus.

### Background to the Invention

Computer aided telephony systems typically comprise a server which runs a voice application and a digital trunk processor which provides high quality computer aided telephony functions. The telephony functions are provided using resources such as a digital trunk adapter and E1/T1 trunk interface card, voice recognition resources, DTMF detection resources, text to speech resources, facsimile resources and speech recognition resources. Many of these resources are realised using dedicated digital signal processors (DSPs).

A voice application running at the server may periodically require access to a number of the above call processing resources. Access is provided to such call processing resources via a time division multiplexed (TDM) bus.

Each of the call processing resources or DSPs may have different operating requirements and capabilities. For example, the TDM bus may be capable of operating over 4096 time slots, a voice processor may be able to operate using anyone of the first 1024 time slots and a DTMF detector may be able to operate using anyone of the first 2048 time slots. However, a facsimile card may only be able to operate using any one of the first 32 time slots. Therefore, when a voice application is started, in response to either an incoming or outgoing call, assuming that the voice processing application requires use of the facsimile card in addition to other call processing functions, any one of the first 32 time slots must be available to allow the facsimile card to be used in conjunction with the other resources. In effect, this constraint is also imposed upon the voice processing card and the DTMF card since the voice processing application will access the call processing resources needed by that application using the same time slot of the TDM bus and need to exchange data between all of the resources.

It will therefore be appreciated that there may be instances in which the call processing demands of the voice processing application cannot be met due to the unavailability of any one of the call processing resources on a common time slot selected from the first 32 time slots.

Still further, many of the DSPs may operate at different frequencies. Therefore, even when a common time slot is assigned, compatibility between the time slots is still not guaranteed.

It is an object of the present invention at least to mitigate some of the problems of the prior art.

### Summary of the Invention

Accordingly, a first aspect of the present invention provides method for processing data within a data processing system having at least first and second data processing resources connectable to a time division multiplexed bus operable over a range of time slots; the first and second data processing resources being operable using first and second ranges of the time slots of the bus; the method comprising the steps of
establishing a time slot map comprising data identifying the first and second ranges of time slots over which the first and second data processing resources are operable;
identifying from the time slot map a common available time slot for the first and second data processing resources; and
assigning the common available time slot for use by the first and second data processing resources.

It can be appreciated that by ensuring that a time slot common to both the first and second data processing resources is available and by reserving that time slot for use by those processing resources, the telephony processing needs of the application can be supported.

Preferably, embodiments provide a method in which the step of establishing the time slot map comprises the step of storing at least one of an identifier for each of the plurality of time slots, an indication of whether a time slot is available, an identifier of at least one of the two data processing resources and an indication of the range of time slots over which the at least one of the two data processing resources is operable.

Further embodiments provide a method further comprising the step of collating information identifying the respective ranges of time slots over which the two data processing resources are operable.

A second aspect of the present invention provides a data processing system comprising a time division multiplexed bus operable using a plurality of time slots; at least two data processing resources for processing data in response to at least one data processing request from a software element; each of the at least two data processing elements being operable on respective ranges of the plurality of time slots; a time slot manager for determining from the respective ranges of the plurality of time slots whether a common time slot of the plurality of time slots useable by both of the two data processing resources is available to exchange data between the two data processing resources; and a configuration manager for assigning such a common time slot for use by the data processing resources.

### Brief Description of the Drawings

Embodiments of the present invention will now be described, by way of example only, with reference to the accompanying drawings in which:
figure 1 illustrates a call processing system for processing incoming and outgoing telephony calls;
figure 2 illustrates a time slot map according to an embodiment;
figure 3 depicts a data structure used in an embodiment of the present invention;
figure 4 shows a first flowchart for initialising DSPs according to an embodiment;
figure 5 illustrates a flowchart allocating DSP resources to an application according to an embodiment; and
figure 6 depicts a flowchart for releasing DSP resources according to an embodiment.

### Description of the preferred embodiments

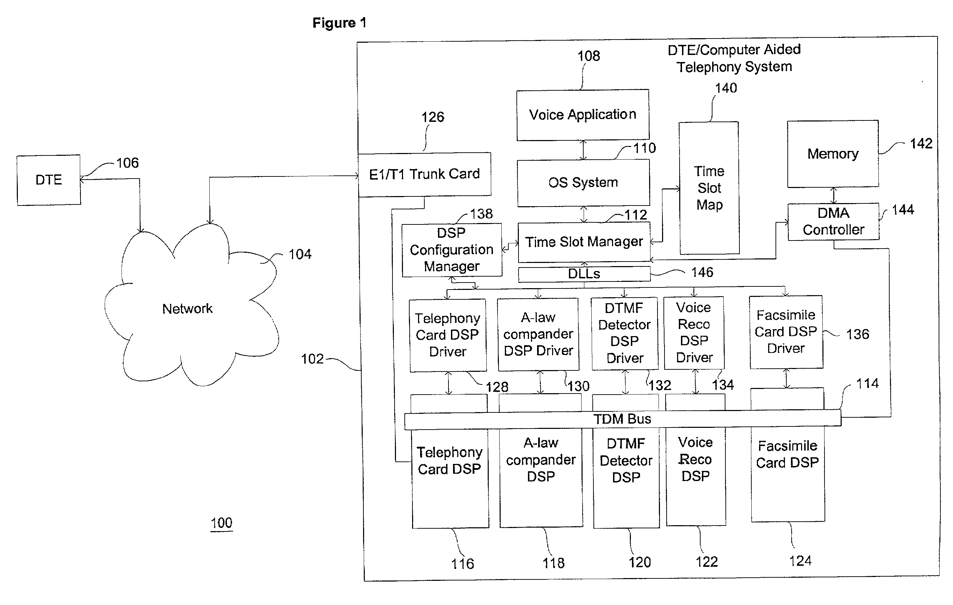

Referring to figure 1 there is shown a call processing system 100 for implementing computer aided telephony. The call processing system 100 comprises a computer aided telephony system 102 coupled to a communication network 104. The computer aided telephony system 102 is able to support incoming and outgoing calls to and from a data communication equipment 106. The data communication equipment 106 may be a conventional DTMF telephone, a computer, a facsimile machine or other type of communication device.

The computer aided telephony system 102 comprises a voice application 108 for performing a required function such as, for example, telephone banking, fax-on-demand etc. The voice application runs on top of an operating system 110. The operating system may be Unix, Windows or the like. The operating system comprises a number of hooks (not shown) which redirect operating system calls issued by the voice application 108 to a time slot manager 112. The time slot manager 112 is arranged to manage the use of a TDM bus 114 by a number of digital signal processing resources 116 to 124. The DSP resources may include, for example, a telephony card DSP 116, an A-law or µ-law compander DSP 118, a DTMF detector DSP 120, a voice recognition/synthesis DSP 122 and a facsimile card DSP 124. It will be appreciated that other types of DSP performing associated functions may be provided. Alternatively, the illustrated DSP's may be present in any combination.

The telephony card DSP 116 interfaces with an E1/T1 trunk card 126, which acts as the physical interface to the communication network 104.

The time slot manager 112 accesses the DSP resources 116 to 124 via the TDM bus 114 and corresponding DSP drivers 128 to 136. Typically, each of the DSPs used within the system will have a respective API. Those APIs may not be the same and may need to be called using different formats. Therefore, embodiments provide a uniform set of dlls 146 for calling each of the DSPs. The dlls are arranged to present to a higher application or operating system a consistent interface for all of the DSPS and to map that consistent interface to the specifics of the DSP drivers. This has the significant advantage that the underlying DSPs can be changed without the need to change the voice application since the dll calls remain unchanged.

The computer aided telephony system 102 also comprises a DSP configuration manager 138 and a time slot map 140. The DSP configuration manager 138 determines which DSP resources are present within the computer aided telephony system and assigns appropriate identifiers to those resources so that they may be used by the voice application 108. The time slot map 140 is used to record the range of time slots over which each of the DSP resources 116 to 124 can be operated and which of those operable time slots are in use and which are not.

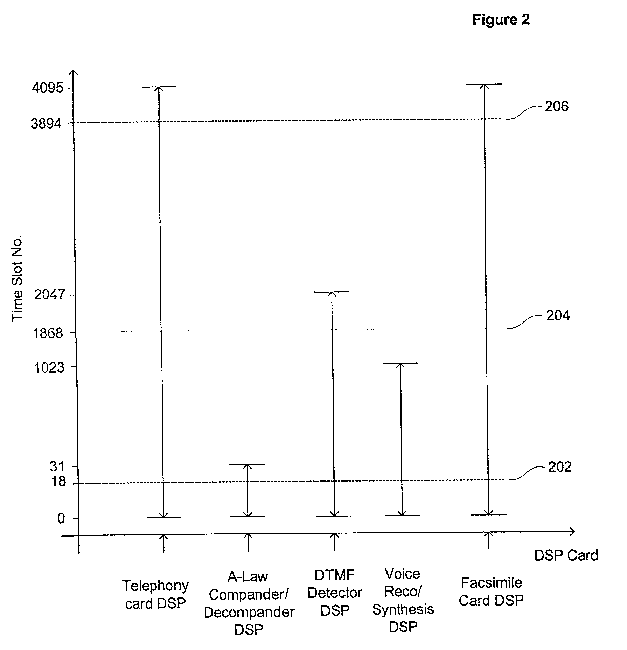

For example, the chart 200 of figure 2, illustrates, for an embodiment, the range of time slots over which each of the DSP resources 116 to 124 can operate. The telephony card DSP 116 can operate over 4096 time slots. The A-law compander DSP 118 can operate over 32 time slots. The DTMF detector DSP 120 is operable over 2048 time slots. The voice recognition/synthesis DSP 122 is operable over 1024 time slots and the facsimile card DSP 124 can operate over 4096 time slots.

It can be appreciated that the respective ranges of time slots over which the DSPs are operable varies significantly and there are varying degrees of overlap of those time slot ranges. Each of the DSP resources 116 to 124 can access an overlapping range of time slots defined by time slots 0 to 31. Time slot 18 (reference numeral 202) is an example of a time slot that is common to all of the DSP resources 116 to 124. However, it can be seen that time slot 1868 (reference numeral 204) is common only to the telephony card DSP 116, the DTMF detector DSP 120 and the facsimile card DSP 124.

Furthermore, it can be seen that the telephony card DSP 116 and the facsimile card DSP 124 share, exclusively, a significant number of overlapping time slots. Time slot 3894 (reference numeral 206) is an example of such an exclusively shared time slot.

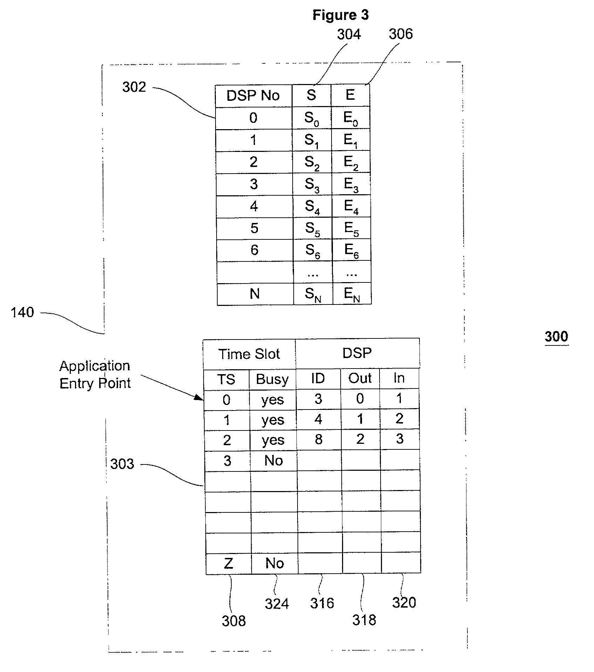

Figure 3 shows a number of data structures 300 that are used in an embodiment of the present invention. The data structures include the time slot map 140. The time slot map comprises two tables 302 and 303.

The first table, a DSP resources table, 302 is used to store an indication of the resident or installed DSPs. The identifier assigned to each resident DSP resource is stored within the table 302. The table 302 also contains an indication of the time slots over which the DSPs can operate. A start time slot column 304 provides an indication of the first time slot of a contiguous range of TDM bus time slots over which a DSP can operate. An end time slot column 306 provides an indication of the last time slot of the contiguous range of time slots over which a DSP can operate.

The second table 303, a time slot availability table, comprises a list of all time slots 308. The table contains a busy/available flag column 324 that is used to provide an indication of whether the corresponding time slot is in use or not. The table 303 also contains for each assigned time slot the identifier of the DSP associated with that time slot, an "out" parameters 318, an "in" time slot number 320 and data pointers 322. The "in" time slot number 320 provides an indication of the time slot on which a corresponding DSP will receive data to be processed. The "out" time slot number 318 provides an indication of the time slot during which the DSP will output processed data to another DSP or to the application.

When data is scheduled to be processed by a specific DSP, that data is retrieved from memory and written to the input FIFO of the specific DSP during the designated In time slot for that DSP. Conversely, when data has been processed by a DSP, it is written to the output FIFO of the specific DSP in preparation for output via an appropriate time slot of the TDM bus as specified during the out time slot of that DSP. Each of the DSPs contain a table of the in and out time slot numbers associated with that DSP. Once data is ready to be returned to an application, that last DSP to perform processing upon data writes that data using DMA to the memory 142 using the DMA controller 144.

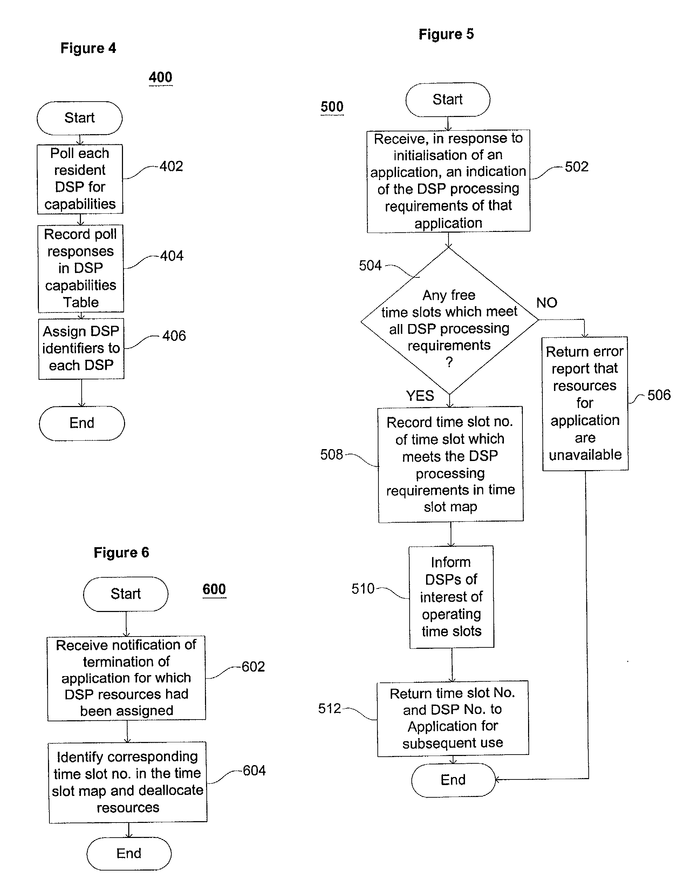

Referring to figure 4, there is shown a flowchart 400 of the processing performed by the DSP configuration manager 138 upon initialisation of the computer aided telephony system 102. At step 402, each of the DSP resources 116 to 124 is polled in turn to determined the processing capabilities associated with that DSP together with the range of time slots over which the DSP can be used. The polling is performed using the corresponding dll call 146 which maps to the appropriate driver for a DSP resource. The dll call may be, for example, *getconfig*. The dll call is arranged to return the range of time slots over which the DSP can operate. Preferably, the dll call also returns one or more of the frequency of operation, the FIFO buffers sizes and any other operating constraints of the DSP.

The results of the poll are recorded in the DSP capabilities table 302 at step 404. Each of the DSP resources 116 to 124 which responds to the poll conducted at step 402 is assigned a unique DSP identifier at step 406. The unique identifier is also recorded in the DSP capabilities table 302.

Although the embodiments described herein use a single DSP capabilities table per application, embodiments can be realised in which the DSP capabilities table is shared by a number of application running concurrently within the computer aided telephony system. Each application may be assigned an appropriate entry point for an associated set of DSP resources that have been assigned to that application.

Referring to figure 5, there is shown a flowchart 500 of the processing performed by the time slot manager 112 in response to receiving a request from the voice application 108 for access to DSP resources. The voice application provides to the operating system 110, and ultimately to the time slot manager 112, an indication of the call processing capabilities that will be required during execution of the application. The time slot manager 112 receives at step 502, in response to initialisation or the initial launch of a voice application 108, an indication of the call processing requirements of that voice application 108.

The time slot manager 112 determines at step 504 from the time slot map 140 whether or not there are any free time slots that are capable of meeting all of the call processing requirements of the voice application 108. If it is determined at step 504 that there are no free time slots which meet all of the call processing requirements, an error message is returned to the voice application 108 at step 506. The error indicates that the required call processing resources are not available. However, if it is determined at step 504 that a time slot or a number of time slots is available via which access can be gained to all or at least two or more of the DSP resources 116 to 124 required by the voice application 108, a record is made of the time slot and the associated DSPs in the DSP capabilities table at step 508. At step 510, the time slots over which the DSPs will receive and transmit data over the TDM bus are written to the DSP of interest using corresponding dll calls such as, for example, *setTDMin and setTDMout*. Furthermore, an indication of the corresponding time slot is returned to the voice application 108 together with an indication of the DSP identifiers 304 needed to meet the DSP call processing requirements of the voice application at step 512.

For example, assume that the voice application 108 is intended to perform DTMF detection. It will be appreciated that the voice application will need to use the DSP resources of the telephony card DSP 116, the A-law compander DSP 118 and the DTMF detector DSP 120. It can be appreciated from figure 2 that these DSP resources 116, 118 and 120 are accessible using the range of common time slots that are numbered 0 to 31. Assume that the time slot 18 (reference numeral 202) is available to perform the necessary decompanding. Therefore, time slot 18 would be reserved for use between the telephony card DSP 116 and the A-law compander DSP 118. The Out time slot number of the telephony card DSP 116 would be set to 18. The In time slot number of the A-law compander would be set to 18. Therefore, these two DSPs will be able to communicate during time slot 18 to transfer data from the telephony card DSP to the A-law compander DSP.

Furthermore, to perform DTMF detection, the A-law compander will need to transfer any expanded data to the DTMF detector DSP 120. Suitably, the time slot manager will identify an available common time slot for exchanging data between the A-law compander DSP 118 and the DTMF detector DSP 120. Once a suitable time slot has been identified, it will be reserved within the time slot map and the respective DSPs will be informed of the In and Out time slot numbers accordingly. For example, time slot 19 may be reserved for use between the A-law compander DSP and the DTMF detector.

The time slot identifiers 18 and 19 will be returned to the voice application, via appropriate file descriptors for subsequent use. Therefore, if the voice application 108 needs to perform DTMF detection, data received via the E1/T1 trunk card 126 and the telephony card DSP 116 is fed, via time slot 18, to the A-law compander DSP. The decompanded data results are output on time slot 19 over the TDM bus to the DTMF detector DSP. The DTMF detector DSP processes the data and produces an output representing the detected input tone(s).

Referring to figure 6 there is shown a flowchart 600 of the processing performed by the time slot manager when the voice application 108 terminates. Notification of the termination of the application 108 for which corresponding DSP resources and time slots have been assigned is received at step 602. At step 604, the time slots that were reserved for use by the application and the corresponding DSP resources are identified in the time slot map 140 and all fields corresponding to those time slot numbers are cleared. The time slot busy flags for those time slots are set to indicate that it is available for use.

Although the time slot map has been described with reference to two tables, it will be appreciated that the present invention is not limited to such an arrangement. Embodiments can be produced in which a more comprehensive single table can be realised, which includes for each time slot a list of DSPs that are operable within that time slot.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising
a time division multiplexed bus operable using a plurality of time slots;
at least two data processing resources for processing data in response to at least one data processing request from a software element; each of the at least two data processing resources being operable on respective ranges of the plurality of time slots;
a time slot manager for determining from the respective ranges of the plurality of time slots whether a common time slot of the plurality of time slots useable by both of the two data processing resources is available to exchange data between the two data processing resources; and
a configuration manager for assigning such a common time slot for use by the data processing elements.

2. A data processing system as claimed in claim 1, further comprising means for establishing a data structure for storing data identifying the plurality of time slots and at least one of an indication of whether to time slot is available, an identifier of at least one of the two data processing resources and an indication of the range of time slots over which at least one of the two data processing resources is operable.

3. A data processing system as claimed in any preceding claim, in which the configuration manager comprises means for collating information identifying the respective ranges of time slots over which the two data processing resources are operable.

4. A data processing system as claimed in any preceding claim, in which the configuration manager further comprises means for assigning an identifier to each of the two data processing resources and storing the identifier together with the collated data.

5. A data processing system as claimed in any preceding further comprising a telephony trunk operable over a respective range of the plurality of time slots for receiving data from and transmitting data to a telephony network.

6. A data processing system as claimed in any preceding claim in which the data processing resources are at least one of a facsimile DSP, a voice recognition DSP, a speech synthesis DSP, an A-law or µ-Law compander, a DTMF detector DSP and a DTMF generator DSP.

7. A method for processing data within a data processing system having at least first and second data processing resources connectable to a time division multiplexed bus that is operable over a plurality of time slots; the first and second data processing resources being operable using first and second ranges of time slots of the plurality of time slots; the method comprising the steps of
establishing a time slot map comprising at least data identifying the first and second ranges of time slots of the plurality of times slots over which the first and second data processing resources are operable;
identifying from the time slot map a common available time slot for the first and second data processing resources; and
assigning the common available time slot for use by the first and second data processing resources.

8. A method as claimed in claim 7, in which the step of establishing the time slot map comprises the step of storing at least one of an identifier for each of the plurality of time slots, an indication of whether a time slot is available, an identifier of at least one of the two data processing resources and an indication of the range of time slots over which the at least one of the two data processing resources is operable.

9. A method as claimed in either of claims 7 and 8, further comprising the step of collating information identifying the respective ranges of time slots over which the two data processing resources are operable.

10. A method as claimed in any of claims 7 to 9, further comprising the step of assigning an identifier to each of the two data processing resources.

11. A method as claimed in any preceding claim, further comprising the step of receiving data from a communication network for processing by at least one of the two data processing resources.

12. A method as claimed in any of claims 7 to 11, in which the two data processing resources are at least one of a facsimile DSP, a voice recognition DSP, a speech synthesis DSP, an A-law or µ-Law compander, a DTMF detector DSP and a DTMF generator DSP.

13. A computer program element comprising computer program code for implementing a system or method as claimed in any preceding claim.

14. A computer program product comprising a computer readable storage medium having stored thereon a computer program element as claimed in claim 13.
